Europäisches Patentamt

European Patent Office

Office européen des brevets

(19)

(11) Veröffentlichungsnummer: **0 206 380**
**B1**

(12) **EUROPÄISCHE PATENTSCHRIFT**

(45) Veröffentlichungstag der Patentschrift: **01.08.90**

(21) Anmeldenummer: **86200873.7**

(22) Anmeldetag: **21.05.86**

(51) Int. Cl.⁵: **H 02 K 1/27,** H 02 K 21/18

(54) **Einphasensynchronmotor mit einem zweipoligen, dauermagnetisch erregten Rotor.**

(30) Priorität: **24.05.85 DE 3518697**
**24.05.85 DE 3518696**

(43) Veröffentlichungstag der Anmeldung:
**30.12.86 Patentblatt 86/52**

(45) Bekanntmachung des Hinweises auf die
Patenterteilung:
**01.08.90 Patentblatt 90/31**

(84) Benannte Vertragsstaaten:
**CH DE FR GB IT LI**

(56) Entgegenhaltungen:
**EP-A-0 151 497**
**DE-A-3 224 904**
**DE-C-1 488 270**

(73) Patentinhaber: **Philips Patentverwaltung GmbH**
**Wendenstrasse 35 Postfach 10 51 49**
**D-2000 Hamburg 1 (DE)**
(84) **DE**

(73) Patentinhaber: **N.V. Philips'**
**Gloeilampenfabrieken**
**Groenewoudseweg 1**
**NL-5621 BA Eindhoven (NL)**
(84) **CH FR GB IT LI**

(72) Erfinder: **Bertram, Leo**
**Am Sender 10**
**D-5190 Stolberg (DE)**
Erfinder: **Schemmann, Hugo, Dr.**
**Zwartebergweg 6**
**NL-6371 XD Schaesberg (NL)**

(74) Vertreter: **Kupfermann, Fritz-Joachim, Dipl.-Ing.**
**et al**
**Philips Patentverwaltung GmbH Wendenstrasse**
**35 Postfach 10 51 49**
**D-2000 Hamburg 1 (DE)**

EP 0 206 380 B1

## Beschreibung

Die Erfindung bezieht sich auf einen Einphasensynchronmotor mit einem zweipoligen dauermagnetisch erregten Rotor zwischen zwei elektromagnetisch erregten Statorpolen.

Aus der Zeitschrift ETZ, band 30, 1978, Heft 2, Seiten 53 bis 60, ist ein zweipoliger Einphasensynchronmotor mit einem dauermagnetischen Rotor bekannt. Der Rotor besteht aus einem in einem Stück gesinterten anisotropen Dauermagneten mit diametraler Magnetisierung und mit einer durch eine Bohrung in dem zylinderförmigen Dauermagneten geführten Rotorwelle. Aus festigungstechnischen Gründen ist es schwierig, hochwertige Dauermagnete in dieser zylindrischen Form mit einer axial hindurchgeführten Bohrung zu versehen, sobald die Rotorlänge bzw. das Verhältnis von Rotorlänge zu Rotordurchmesser bestimmte Werte überschreitet. Die Leistung dieser Motoren, die im allgemeinen für Kurzzeitbetrieb dimensioniert sind, liegt deshalb bisher nicht über 25 W.

Es ist aus dem Aufsatz von Karl Ruschmeyer, Motoren und Generatoren mit Dauermagneten, abgedruck im Band 123 der Schriftreihe Kontakt und Studium, herausgegeben von Prof. Dr.-Ing. Wilfried J. Bartz, erschienen im Expert-Verlag, 1983, Seiten 36 und 37, für Gleichstrommotoren bekannt, auf einen weichmagnetischen Eisenkern hartmagnetische Dauermagneten aufzubringen. Die Dauermagnete reihen sich längs der Umfangsfläche des Eisenkernes auf Abstand aneinander. Diese Dauermagnete bilden Pole wechselnder Polarität aus. Der weichmagnetische Eisenkern ist dabei radial symmetrisch ausgelegt. Die Dauermagnete bestehen aus Selten-Erden-Magneten, die aufwendig sind. Bei Verwendung von kleinen Magnetblöcken ergibt sich dabei ein wirtschaftlicher Vorteil gegenüber Vollrotoren aus Selten-Erden-Magnetmaterial.

Ein weiterer Nachteil von Einphasensynchronmotoren mit dauermagnetischem Läufer, wie sie in ETZ beschrieben sind, besteht darin, daß bei diesen Motoren relativ große Schwankungen der momentanen Winkelgeschwindigkeit mit einer Frequenz von 100 Hz auftreten, deren Amplitude mehr als $\pm 30\%$ der synchronen Winkelgeschwindigkeit betragen kann. Diese Schwankungen sind zurückzuführen auf das bei reinem Einphasenbetrieb nicht zu vermeidende Wechselmoment sowie auf das magnetische Klebemoment. Es ist aus der DE—AS 14 88 267 bekannt, durch einen in einem getrennten Eisenkreis rotierenden Zusatzmagneten das Wechselmoment zu kompensieren und so zu einem besseren Gleichlauf zu kommen. Diese Methode ist jodoch aufwendig und vergrößert das Bauvolumen des Motors.

Bei der Verwendung von hochwertigen Magnetmaterialien mit einer großen Remanenzinduktion, wie sie beispielsweise bei den Selten-Erden-Materialien gegeben ist, wird der Anlauf durch Grenzschwingungen beeinträchtigt (DE—PS 34 03 041). Gleichzeitig steigt die Anlaufspannung, bei der der Motor noch sicher anläuft. Die Grenzschwingungen werden nach der DE—PS 34 03 041 dadurch vermieden, daß das Trägheitsmoment und der das Klebemoment mitbestimmende Luftspalt derartig beeinflußt werden, daß eine Eingenfrequenz des mit kleiner Amplitude frei schwingenden Systems aus Rotor und Last ungleich der Netzfrequenz ist.

Es ist Aufgabe der Erfindung, einen Einphasensynchronmotor der eingangs erwähnten Art zu schaffen, bei dem der Gleichlauf des Motors auf wirtschaftliche Weise verbessert ist und bei dem bei gutem Gleichlauf des Auftreten von Grenzschwingungen, die die Anlaufspannung erhöhen, vermieden wird.

Die gestellte Aufgabe ist erfindungsgemäß dadurch gelöst, daß der Rotor diametral symmetrisch zur Rotorachse ein blockförmiges weichmagnetisches Mittelteil aufweist mit einer längeren und einer kürzeren Ausdehnung quer zur Rotorachse, wobei beiderseits der sich dabei ausbildenden längeren Seitenflächen Dauermagnete mit Magnetpolen angebracht sind, deren Magnetisierungsrichtung senkrecht auf den längeren Seitenflächen steht, wobei die Dauermagnete eine niederigere magnetische Permeabilität als das Mittelteil aufweisen. Dieser Aufbau des Synchronmotors bringt den Vorteil, daß der Motor durch die Maßnahmen zur Verbesserung des Gleichlaufes in axialer Richtung nicht vergrößert wird. Darüber hinaus läßt er sich wirtschaftlicher herstellen. Auch sind Motoren oberhalb von 25 W Nennleistung wirtschaftlich zu realisieren.

Es ist an sich aus der DE—AS 12 61 235 bekannt, den Rotor eines Synchronkleinsmotors aus zwei dauermagnetischen Teilen aufzubaren, zwischen denen sich ein dünnes Blech befindet. Dieses dünne Blech hat aber nur die Aufgabe, zusätzliche Magnetpole zu bilden an den Stellen, wenn sich gleichnahmige Pole bei den Teilmagneten gegenüberstehen. Dieser Aufbau hat mit Aufgabe und Lösung der vorliegenden Erfindung nichts zu tun.

Nach einer weiteren Ausgestaltung der Erfindung ist vorgesehen, daß die Luftspalte der Dauermagnete zum Stator größer sind als die Luftspalte des weichmagnetischen Mittelteils zum Stator.

Durch den möglichst kleinen Luftspalt zwischen Eisenrotorpolen und Statorpolen aufgrund der Geometrie des Weicheisenteiles ergibt sich bei Drehung des Rotors, daß die Reluktanz oder der magnetische Leitwert für die Statorspulen deutliche Schwankungen aufweist, weil nämlich der magnetische Leitwert steigt, wenn der weichmagnetische Mittelteil mit seiner Längsachse sich annähernd in Richtung des Statorfeldes befindet. Dreht sich der Mittelteil aus dem Statorfeld heraus, dann sinkt der Leitwert wieder ab. Diese Schwankungen des magnetischen Leitwertes reduzieren die Weinkelgeschwindigkeitsschwankungen und verbessern damit den Gleichlauf. Sie werden größer, wenn der Luftspalt zwischen Weicheisenteil und Statorpolen an seiner engsten Stelle möglichst klein ist.

Nach einer weiteren Ausgestaltung der Erfindung ist vorgesehen, daß der weichmagnetische Mittelteil quaderförmig ist. Durch die beschriebene Formgebung wird erreicht, daß die Dauermagnete einen periodisch von der Rotorstellung abhängigen Wechselfluß durch die Statorspulen ausbilden derart, daß der Magnetfluß maximal ist, wenn die Induktivität minimal ist. Hierdurch wird erreicht, daß die Wechselmomente sich voneinander abziehen, der Gleichlauf verbessert und der Lauf des Motors insgesamt ruhiger und vibrationsärmer wird.

Nach einer weiteren Ausgestaltung der Erfindung ist vorgesehen, daß der Luftspalt zwischen Magnetrotorpol und Statorpolen an seiner engsten Stelle derart groß dimensioniert ist, daß die Eigenfrequenz des mit kleiner Amplitude frei schwingenden Systems aus Rotor und Last

$$\omega_0 = \sqrt{\frac{2\hat{M}_{KL}}{J}}$$

ungleich der Netzkreisfequenz $\omega_e$ ist, wobei $\omega_0$ kleiner als 0,9 bis 0,8 $\omega_e$ ist. Dabei ist $\hat{M}_{KL}$ die Amplitude des magnetischen Klebemomentes und J das Massenträgheitsmoment des schwingenden Systems ist. Der Luftspalt zwischen Eisenpolen und Statorpolen soll so klein sein, wie es die Fertigungstoleranzen des Motors gerade erlauben, um möglichst groß Schwankungen des magnetischen Leitwertes zu erzielen und damit den Gleichlauf zu verbessern.

Nach einer weiteren Ausgestaltung der Erfindung ist vorgesehen, daß das Induktivittätsminimum gegenüber dem Magnetflußmaximum um einen Winkel <90° verschoben ist. Hierdurch läßt sich erreichen, daß der Motor für die angestrebte Nennlast hinsichtlich des Gleichlaufes optimalisiert ist.

Nach einer weiteren Ausgestaltung der Erfindung ist vorgesehen, daß die Induktivitätsschwankungen der Spulen bei Drehung des Läufers möglichst groß sind. Je besser der Motor an diese Bedingung angepaßt ist, desto besser ist der Gleichlauf.

Die Erfindung wird anhand des in der Zeichnung dargestellten Ausführungsbeispieles näher erläutert. Es zeigen:

Fig. 1 einen Synchronmotor mit einem aus magnetisch weichen und harten Material geschichteten Rotor,

Fig. 2 bis 4 einen Synchronmotor mit geschichtetem Rotor nach Fig. 1 und verschiedenen Mantelflächenvariationen.

Fig. 5 einen Einphasensynchronmotor mit einem aus magnetisch weichem und magnetisch hartem Material geschichteten Rotor, wobei die Mantelflächen von weichem und hartem Material unterschiedliche Luftspalte mit den Statorpolen ausbilden,

Fig. 6 bis 9 von der Rotormantelfläche nach Fig. 5 abweichende Mantelflächen unter Erfüllung der Bedingung kleiner Luftspalte im Weicheisenbereich und größerer Luftspalte im Magnetmaterialbereich,

Fig. 10 einen geschichteten Rotor mit einer grundsätzlichen Dimensionierung nach den Fig. 5 bis 9, wobei das Magnetmaterial jedoch aus einzelnen Blöcken zusammengesetzt ist, die hochkant auf den weichmagnetischen Mittelteil aufgesetzt sind,

Fig. 11 eine Ausführungsform, ähnlich der nach Fig. 9, wobei abweichend davon des Magnetmaterial teilweise in den Mittelteil aus weichmagnetischem Material eingelassen ist,

Fig. 12 einen Rotor mit einem weichmagnetischen Mittelteil, dessen Seitenteile rechts und links der hartmagnetischen Teile einseitig Nasen bilden,

Fig. 13 einen abgewandelten Rotor nach Fig. 12, bei dem die hartmagnetischen Teile von weichmagnetischen Polstücken überdeckt sind,

Fig. 14 einen geschichteten Rotor mit einer grundsätzlichen Dimensionierung nach den Fig. 5 bis 9, wobei das Magnetmaterial jedoch aus einzelnen Blöcken zusammengesetzt ist, die fächig auf den weichmagnetischen Mittelteil aufgesetzt sind.

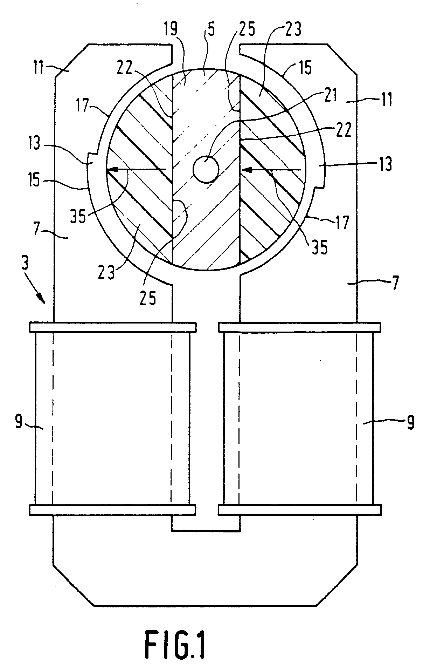

Fig. 1 zeigt einen Einphasensynchronmotor mit einem Statoreisen 3 und einem Rotor 5. Das Statoreisen 3 ist U-förmig ausgebildet, und auf die Schenkel 7 des Statoreisens sind Erregerspulen 9 aufgeschoben. Zwischen freien Schenkelenden 11 der Eisenschenkel 7 sind Statorpole 13 ausgebildet. Die Polbogen dieser Statorpole 13 setzen sich jeweils aus einem Polbogenteil 15 und einem Polbogenteil 17 zusammen, wobei der Radius der Polbogenteile 15 größer als der Radius der Polbogenteile 17 ist. Der zwischen den Polen 13 umlauffähig angeordnete Rotor 5 setzt sich aus einer Materialschichtung zusammen. Das Mittelteil 19 des Rotors, durch das die Rotorwelle 21 geführt ist, ist blockförmig und besteht aus weichmagnetischem Material, wie Eisen. Beiderseits des Mittelteiles 19 sind durch Ankleben Dauermagnete 23 angeordnet, die aus hartmagnetischem Material bestehen. Das hartmagnetische Material kann beispielsweise ein anisotropes Magnetmaterial, wie Barium-Ferrit oder Seltenen Erden sein. Die Trannebenen 25 zwischen dem Mittelteil 19 und den Dauermagneten 23 verlaufen parallel und beiderseits zur Achsrichtung des Rotors 5 Längsseitenflächen 22. Der weichmagnetische Mittelteil 19 ist damit im wesentlichen rechteckförmig.

Beim Umlaufen des Rotors 5 bilden die Dauermagnete 23 periodisch von der Rotorstellung abhängigen Wechselfluß durch die Statorspulen aus. Die Induktivität der Statorspulen, das ist das Verhältnis von dem durch einen Spulenstrom erzeugten Fluß und dem Spulenstrom selbst, ist ebenfalls periodisch von der Rotorstellung O abhängig.

$$L(\theta) = \frac{\phi(\phi)}{i(t)}$$

Sind diese Wechselflüsse dabei derart gestaltet, daß der Magnetfluß maximal ist, wenn, die Induktivität der Spulen 9 minimal ist, so ziehen sich im Leerlauf die Wechselmomente, hervorgerufen durch den Dauermagneten, und die durch die Induktivitätsänderung erzeugten Wechselmomente voneinander ab. Im Betriebsfall ist es demgegenüber günstiger, wenn das Induktivitätsminimum gegenüber dem Mangetflußmaximum um eine Winkel < 90° verschoben ist. Von Vorteil ist es dabei allgemein, wenn die Induktivitätsschwankungen der Spulen bei Drehung des Läufers möglichst groß sind. Die Subtraktion der Wechßselanteile der Momente kommt dadurch zustande, daß das Magnetmoment $i(t)\phi_m \sin\theta$ und das Reluktanzmoment

$$\frac{i}{2} i(t)^2 \frac{dL}{d\theta}$$

passend in der Phase verschoben sind.

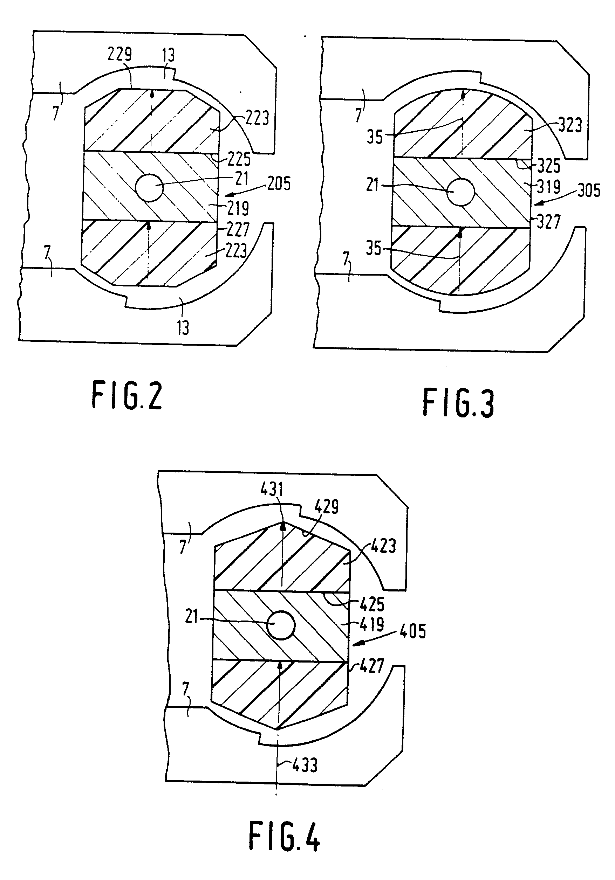

Die Fig. 2 bis 4 zeigen abwechhende Rotorformen, bei denen das erstrebte Ziel ebenfalls erreicht wird. Der Rotor 205 nach Fig. 2 weist wieder ein weichmagnetisches Mittelteil 219 mit beiderseits dieses Mittelteiles angeordneten Dauermagneten 223 auf. Die Trennebenen 225 zwischen den weichmagnetischen und hartmagnetischen Teilen verlaufen beiderseits parallel zur Rotorwelle 21. Die Magnetisierung der Dauermagnete verläuft senkrecht zu den Trennebenen 225. Der Rotor ist senkrecht zu den Trennebenen unter Ausbildung von ebenen Rotorseitenflächen 227 abgeflacht, die senkrecht zu den Trennebenen 225 verlaufen. Weitere Abflachungen 229 der Rotormantelfläche verlaufen senkrecht zu den Flächen 227 bzw. parallel zu den Trennebenen 225.

Die Ausführungsform nach Fig. 3 entspricht im wesentlichen derjenigen nach Fig. 2. Das weichmagnetische Mittelteil· 319 ist mittels Trennebenen 325 von den beiderseits des Mittelteiles, 319 vorgesehenen Dauermagneten 323 getrennt. Der Rotor ist von der Mantelfläche her senkrecht zu den · Trennebenen 325 abgeflacht unter Ausbildung von parallelen Seitenflächen 327.

Wieder eine andere Ausführungsform der Rotormantelfläche ergibt sich aus Fig. 4. Wieder sind mittels Trennebenen 425 getrennt beiderseits eines weichmagnetischen Mittelteiles 419 Dauermagnete 423 vorgesehen. Senkrecht zu den Trennebenen 425 sit die Mantelfläche unter Ausbildung von Mantelflächen 427 abgeflacht. Die Dauermagnete 425 weisen eine Art Dachform 429 auf, wobei die Firste 431 der dachförmig geformten Mantelflächen 429 in eine Rotormittelebene 433 fallen.

Die Magnetisierung ist bei allen Rotorausführunsformen immer senkrecht zu den Trennebenen gleichsinnig gewählt. Diese Gleichsinnigkeit ergibt sich aus den Magnetisierungspfeilen 35.

Die Abflachungen an den Rotoren nach Den Fig. 2 bis 4 sind vorzugsweise durch Anschleifen erzielt.

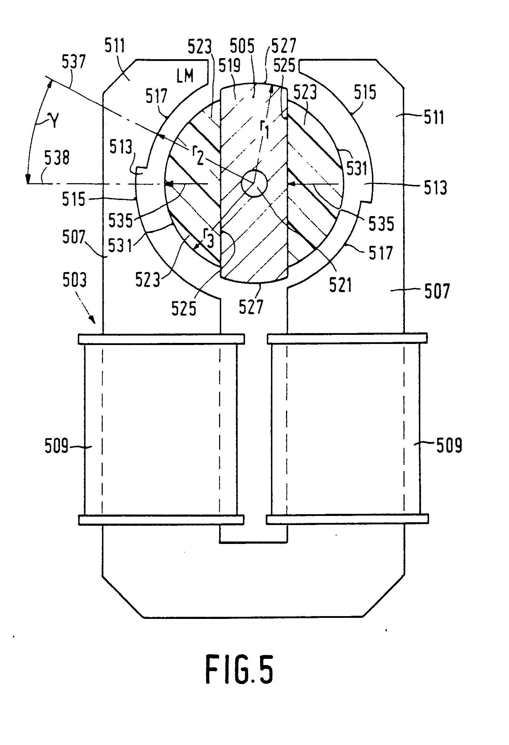

Ein Einphasensynchronmotor nach Fig. 5 weist ein Statoreisen 503 und einen Rotor 505 auf. Das Statoreisen 503 ist U-förmig ausgebildet. Auf die Schenkel 507 des Statoreisens sind Erregerspulen 509 aufgeschoben. Zwischen den freien Schenkelenden 511 der Eisenschenkel 507 sind Statorpole 513 ausgebildet. Die Polbogen dieser Statorpole 513 setzen sich jeweils aus einem Polbogenteil 515 und einem Polbogenteil 517 zusammen, wobei der Radius der Polbogenteile 515 größer ist als der Radius der Polbogenteile 517. Der zwischen den Polen 513 umlauffähig angeordnete Rotor 505 setzt sich aus einer Materialschichtung zusammen. Das Mittelteil 519 des Rotors, durch das die Rotorwelle 521 geführt ist, besteht aus weichmagnetischem Material, wie beispielsweise Eisen. Beiderseits des Mittelteiles 519 sind radial nach außen durch Ankleben Dauermagnete 523 angeordnet, die aus hartmagnetischem Material bestehen. Das hartmagnetische Material kann beispielsweise aus Selten-Erden-Material, wie z.B. Samarium-Cobalt oder Neodymium-Eisen-Bor, bestehen. Die Trennebenen 525 zwischen dem weichmagnetischen Mittelteil 519 und den Dauermagneten 523 verlaufen parallel zueinander und beiderseits zur Achsrichtung des Rotors 505 bzw. der Rotorwelle 521. Der weichmagnetische Mittelteil 519 ist damit rechteckförmig, wobei allerdings die außen gelegenen Polflächen 527 ballig ausgebildet sind bzw. Teilzylinderflächen ·aufweisen. Die Polflächen 527 des weichmagnetischen Mittelteiles 519 sind von der Achse 521 des Rotors so weit entfernt bzw. haben einen Radius $r_1$, der so wenig wie möglich kleiner ist als der Radius $r_2$ der Polbogenteile 517. Die Differenz zwischen $r_1$ und $r_2$ soll so klein wie möglich sein, wie es Fertigungstoleranzen überhaupt zulassen. Je geringer der Abstand zwischen den Polflächen 527 un den Polbogenteilen 517, desto besser die Wirkung.

Die Polflächen 531 der Dauermagnete 523 haben einen Radius $r_3$, der kleiner ist als der Radius $r_1$ der Polflächen 527 des weichmagnetischen Mittelteiles. Der Luftspalt der Polbogenteile 517 gegenüber den Polflächen 527 ist damit kleiner als der Luftspalt gegenüber den Polflächen 531. Dieser Luftspalt zwischen Polbogenteilen 517 und Polflächen 531 ist in Fig. 5 mit $L_M$ bezeichnet. Dieser Lutftspalt $L_M$ soll so groß sein, daß des Klebemoment des Motors auf einen Wert erniedrigt wird, bei dem die Grenzschwingungen unterhalb der Spannung liegen, bei der der Motor aufgrund seiner Dimensionierung und seiner Belastung anläuft, die Grenzschwingungen also nicht bei einer höheren Spannung auftreten. Dies ist der Fall, wenn die Eigenfrequenz des mit kleiner Amplitude frei schwingenden Systems aus Rotor und Last

$$\omega_0 = \sqrt{\frac{2\hat{M}_{KL}}{J}}$$

ungleich der Netzkreisfrequenz $\omega_e$ ist. Vorzugsweise soll $\omega_e$ dabei kleiner als 0,9 bis 0,8 $\omega_e$ sein.

Durch die unterschiedlich groß bemessenen Luftspalte $L_M$ zwischen Polbogenteilen 507 und Magnetpolflächen 531 einerseits und Polbogenteilen 517 und Eisenpolflächen 527 andererseits ergibt sich bei Drehung des Rotors eine schwankende Reluktanz bzw. ein stark schwankender Leitwert für die Statorspulen bei gleichzeitiger Begrenzung der Klebemomentamplitude $\hat{M}_{kl}$.

In der Zeichnung ist im Bereich der Dauermagnete 523 durch Pfeile 535 eine gleichsinnige diametrale Magnetisierung des Rotors aufgezeigt. Auch eine Konzentrierung der Feldinien der Dauermagnete 523 im Mittelbereich der Magnetpolflächen 531 ist möglich zur Vergrößerung des Asymmetriewinkels $\gamma$, wobei $\gamma$ der Winkel ist zwischen der Richtung des Statorfeldes 538 und der Rotorposition 537 bei abgeschalteten Statorspulen.

In Fig. 5 ist die mittlere Lage des Statormagnetfelds durch die Linie 538 angegeben. Der größte magnetische Leitwert tritt dann für die Statorspulen 509 auf, wenn die Polflächen 527 des Eisenmittelteiles so gedreht sind, daß sie in Richtung des Statorfeldes 538 ausgerichtet sind.

In den weiteren Ausführungsbeispielen geht es im wesentlichen darum, unter der Voraussetzung einer möglichst großen Relutanzschwankung durch Reduzierung des Luftspaltes zwischen dem weichmagnetischen Mittelteil und den Statorpolen und einer Vermeidung der Grenzschwingungen durch eine passend gewählte Vergrößerung des Luftspaltes zwischen den hartmagnetischen Rotorkomponenten und den Statorpolen eine möglichst fertiggungsgünstige Ausführung der hartmagnetischen Rotorteile unter Verwendung unterschiedlicher Ausgangsgeometrien und Bearbeitungsverfahren zu erreichen. Als zusätzlicher Effekt wird die Erhöhung des Asymmetriewinkels $\gamma$ berücksichtigt.

Zusätzlich wird die Möglichkeit betrachtet, die Phasenverschiebung zwischen der Rotorstellung, in der der Magnetfluß maximal ist und der Rotorstellung, in der die Reluktanz maximal ist, ungleich 90° zu machen, um die Verbesserung der Gleichlaufschwankung an unterschiedliche Belastungsfälle anzupassen.

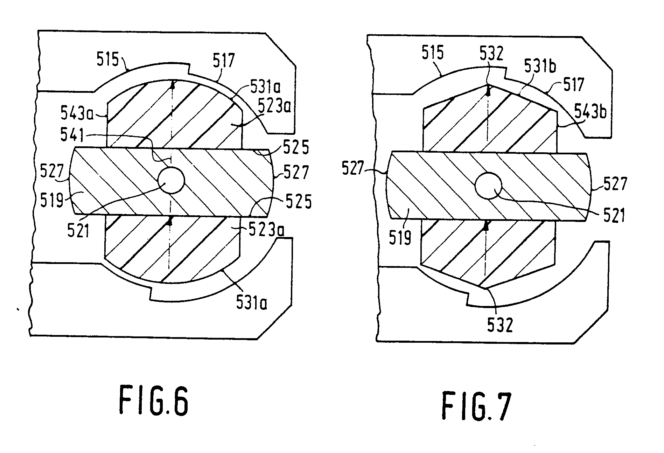

In Fig. 6 sind die Dauermagnete von den Polflächen 527 des Mittelteiles 519 in Richtung auf die Mittelteilmitte 541 zurückgenommen unter Ausbildung von zurückgesetzten Magnetsegmentflächen 543a. Das gleiche gilt für die Fig. 7, 8, 9, 11, 12 und 13. Die Magnetpolflächen 531a an den Dauermagneten 523a der Fig. 6 sind damit verkürzt.

Bei den Fig. 7, 8, 9, 11, 12 und 13 gibt es entsprechend den zurückgesetzten Dauermagnet-Absatzflächen 543a zurückgesetzte Dauermagnet-Absatzflächen 543b, 543c, 543d, 543e, 543f und 543g.

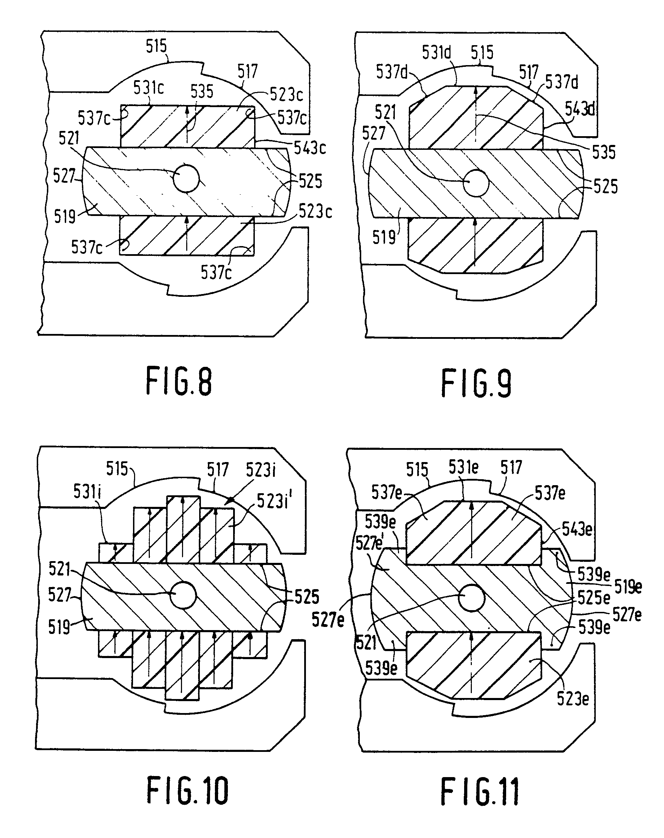

Die Rotorausführungsformen nach den Fig. 6 bis 9 entsprechen einander mit Ausnahme der Ausbildung der Polflächen 531, währen die Polfläche 531a gekrümmt ist, entsprechend der Ausbildung nach Fig. 5, haben die Polflächen 531b nach Fig. 7 zur Vergrößerung des Asymmetriewinkels $\gamma$ eine Dachform mit dem Scheitel im Bereich 532. Bei Fig. 8 sind die Dauermagnetpolflächen 531c der Dauermagnete 532c eben ausgebildet, so daß sich bei jedem Magnet 523c in Richtung auf die Statorpole vorstehende Segmenteckbereiche 537c ergeben. Bei der Ausführungsform nach Fig. 9 sind die Polflächen 531d zwar eben, wie in Fig. 8, jedoch sind angefaste Eckflächen 537d vorhanden, über die sich die Polflächen 531d besser in die Polybogenteile 515 und 517 des Statoreisens einpassen.

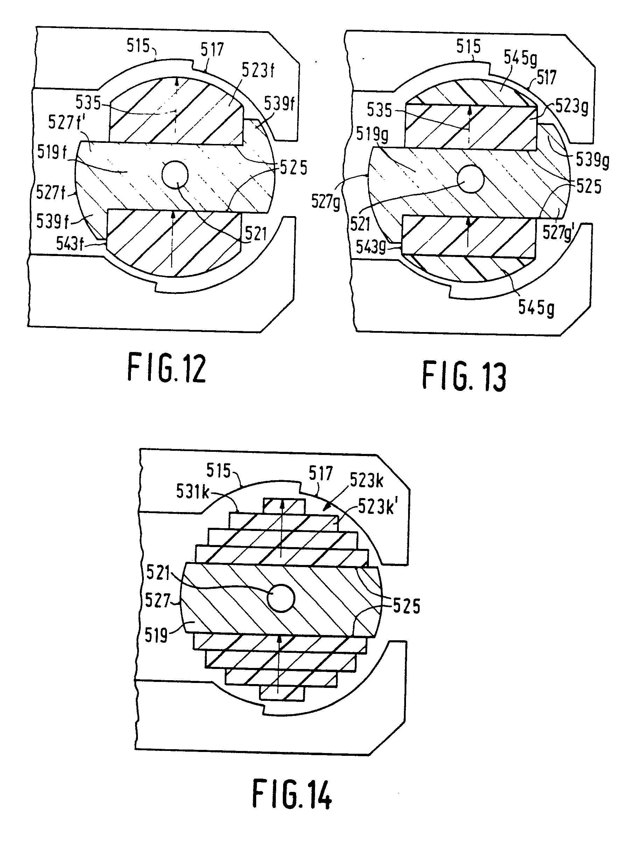

Die Ausführungsform nach Fig. 11 entspricht im wesentchen der nach Fig. 9. Die Dauermagnete 523e sind in diesem Fall in das Eisenmittel 519 eingelassen. Dabei wird die Eisenpolfläche 527e symmetrisch zur Längsachse des Mittelteils 519e im Umlaufrichtung durch verlängerte Polteile 527e' vergrößert. An den verlängerten Polteilen 527e bilden sich Nasenteile 539e des weichmagnetischen Mittelteils 519e aus, die die Absatzfläche 543e teilweise überdecken.

Etwas ähnliches gilt für die Fig. 12 und 13, wobei abermals die Eisenpolflächen 527, 527g in Umlaufrichtung durch verlängerte Polflächen 527f', 527g' vergrößert sind und die verlängerten Polflächen 527f', 537g' sich an Nasenteilen 539f, 539g des weichmagnetischen Mittelteiles 519f, 519g ausbilden, die die Absatzflächen 543f und 543g teilweise überdecken. Die Nasenteile 539f, 539g sind jedoch nicht mehr symmetrisch, sondern einseitig zur Längsachse des Mittelteils 519f, 519g angeordnet. Dadurch wird erreicht, daß eine Phasenverschiebung zwischen Reluktanzverlauf und Magnetflußverlauf erzielt wird, die für einen bestimmten Betriebsfall des Motors optimale Gleichlaufverbesserung bringt.

Der Unterschied zwischen der Fig. 12 und Fig. 13 besteht darin, daß die Magnetsegmente 523f und 523g unterschiedlich ausgebildet sind. Bei Fig. 12 sind die Magnetsegmente 523f einstückig ausgebildet, während die Magnetsegmente 523g bei Fig. 13 aus einem flächigen Block und aus einem aufgesetzten Polstück 545g bestehen.

Bei den Ausführungsformen nach Fig. 10 und Fig. 14 sind die Magnetsegmente 523i und 523k aufgelöst in Einzelblöcke mit Teilpolflächen 531i und 531k. Die Höhe der einzelnen Teildauermagnetblöcke 523i' nach Fig. 10 ist so gewählt, daß die Teildauermagnetpolflächen 531i sich stufen- oder terrassenförmig in die Polbogenteile 515 und 517 einpassen. Die einzelnen Dauermagnetblöcke 523i' sind längs der Trennebenen 525 aneinandergesetzt. Bei der Ausführungsform nach Fig. 14 sind die einzelnen Teildauermagnetblöcke 523k' der Dauermagnete 523k parallel zu den Trennebenen 525 aufeinandergeschichtet und in ihrer Länge parallel zum weichmagnetischen Mittelteil stufenweise verkürzt, so daß die Teilpolflächen 531 sich stufenförmig in die Rundung der Polbogenteile 515 und 517 ein passen.

Bei den Ausführungsformen nach Fig. 7, 10 und 14 ergibt sich eine Vergrößerung des Asymmetriewinkels γ zur Verbesserung des Anlaufes gegen Reibung.

## Patentansprüche

1. Einphasensynchronmotor mit einem zweipoligen dauermagnetisch erregten Rotor zwischen zwei elektromagnetisch erregten Statorpolen, dadurch gekennzeichnet, daß der Rotor (5, 205, 305, 405, 505) diametral symmetrisch zur Rotorachse ein blockförmiges weichmagnetisches Mittelteil (19, 219, 319, 419, 519) aufweist mit einer längeren unde einer kürzeren Ausdehnung quer zur Rotorachse, wobei beiderseits der sich dabei ausbildenden längeren Seitenflächen (22) Dauermagnete (23, 233, 323, 423, 523, 523a—k) mit Magnetpolen angebracht sind, deren Magnetisierungsrichtung (35 senkrecht auf den längeren Seitenflächen (22) steht, wobei die Dauermagnete eine niedrigere magnetische Permeabilität als das Mittelteil (19) aufweisen.

2. Einphasensynchronmotor nach Anspruch 1, dadurch gekennzeichnet, daß die Luftspalte der Dauermagnete (23) zum Stator (3) größer sind als die Luftspalte des weichmagnetischen Mittelteiles (19) zum Stator (3).

3. Einphasensynchronmotor nach Anspruch 1 oder 2, dadurch gekennzeichnet, daß der weichmagnetische Mittelteil (19) quaderförmig ist.

4. Einphasensynchronmotor nach Anspruch 1, dadurch gekennzeichnet, daß die Rotormantelfläche parallel zur Magnetisierungsrichtung (35) der Dauermagnete (23) abgeflacht ist.

5. Einphasensynchronmotor nach Anspruch 1, 2 und 3, dadurch gekennzeichnet, daß die Dauermagnete (23) parallel zu ihrer Magnetisierungsrichtung (35) abgeflacht sind.

6. Einphasensynchronmotor nach Anspruch 1 bis 5, dadurch gekennzeichnet, daß die Rotormantelfläche im Bereich der Dauermagnetpole (23) dachförmig ausgebildet ist.

7. Einphasensynchronmotor nach den Ansprüchen 1 bis 6, dadurch gekennzeichnet, daß die Eigenfrequenz des mit kleiner Amplitude frei schwingenden Systems aus Rotor und Last

$$\omega_0 = \sqrt{\frac{2\hat{M}_{KL}}{J}}$$

ungleich der Netzkreisfrequenz $_e$ ist und die Änderung des magnetischen Leitwertes bei Drehung des Rotors maximal ist durch einem minimalen Luftspalt zwischen weichmagnetischem Mittelteil und Statorpolen, wobei $\hat{M}_{KL}$ die Amplitude des magnetischen Klebemomentes und J das Massenträgheitsmoment des schweingenden Systems ist.

8. Einphasensynchronmotor nach Anspruch 1, dadurch gekennzeichnet, daß die Eigenfrequenz $\omega_o$ kleiner als 0,9 bis 0,8 $\omega_o$ ist und die Änderung des magnetischen Leitwertes maximal ist durch einen minimalen Luftspalt zwischen weichmagnetischem Mittelteil und Statorpolen.

9. Einphasensynchronmotor nach den Ansprüche 1 bis 8, dadurch gekennzeichnet, daß das Induktivitätsminimum gegenüber dem Magnetflußmaximum un einen Winkel < 90° verschoben ist (Betriebsfall).

10. Einphasensynchronmotor nach den Ansprüche 1 bis 9, dadurch gekennzeichnet, daß die hartmagnetischen Magnetsegmente aus Barium-Ferrit oder Seltenen Erden bestehen.

## Revendications

1. Moteur synchrone monophasé à rotor à deux pôles excité par aimnant permanent entre deux pôles de stator excités par électroaimant, caractérisé en ce que le rotor (5, 205, 305, 405, 505) comporte une partie médiane faiblement ferromagnétique en forme de bloc (19, 219, 319, 419, 519) diamétralement symétrique par rapport à l'axe du rotor, qui présente une dimension longue et une dimension courte perpendiculairement à cet axe, des aimants permanents (23, 223, 333, 423, 523, 523a—k) à pôles magnétiques, dont la direction d'aimantation (35) est perpendiculaire aux grandes faces latérales (22) ainsi formées, étant disposés de part et d'autre de ces grandes faces latérales (22), les aimants permanents présentant une perméabilité magnétique plus faible que la partie médiane (19).

2. Moteur synchrone monophasé suivant la revendication 1, caractérisé en ce que les entrefers entre les aimants permanents (23) et le stator (3) sont plus grands que les entrefers entre la partie médiane faiblement ferromagnétique (19) et le stator (3).

3. Moteur synchrone monophasé suivant la revendication 1 ou 2, caractérisé en ce que la partie médiane faiblement ferromagnétique (19) est parallélépipédique.

4. Moteur synchrone monophasé suivant la revendication 1, caractérisé en ce que la surface périphérique du rotor présente des méplats parallèles à la direction d'aimantation (35) des aimants permanents (23).

5. Moteur synchrone monophasé suivant la revendication 1, 2 et 3, caractérisé en ce que les aimants permanents (23) présentent des méplats parallèles à leur direction d'aimantation (35).

6. Moteur synchrone monophasé suivant l'une quelconque des revendications 1 à 5, caractérisé en ce que la surface périphérique du rotor a la forme d'un toit dans la zone des pôles magnétiques permanents (23).

7. Moteur synchrone monophasé suivant l'une quelconque des revendications 1 à 6, caractérisé en ce que le fréquence propre du système, constitué du rotor et de la charge, oscillant librement à faible amplitude

$$\omega_0 = \sqrt{\frac{2\hat{M}_{KL}}{J}}$$

est différente de la fréquence angulaire de réseau $\omega_e$, et la variation de la perméance lors de la rotation du rotor est maximale grâce à un entrefer minimal entre la pièce médiane faiblement ferromagnétique et les pôles de stator, $\hat{M}_{KL}$ étant l'amplitude du moment d'adhérence magnétique et J le moment d'inertie du système oscillant.

8. Moteur synchrone monophasé suivant la revendication 7, caractérisé en ce que la fréquence propre $\omega_o$ est inférieure à 0,9—0,8 $\omega_e$ et la variation de la perméance est maximale grâce à un entrefer minimal entre la partie médianne faiblement ferromagnétique et les pôles de stator.

9. Moteur synchrone monophasé suivant l'une quelconque des revendications 1 à 8, caractérisé en ce que le minimum d'inductance par rapport au maximum de flux magnétique est décalé d'un angle < 90° (en service).

10. Moteur synchrone monophasé suivant des revendications 1 à 9, caractérisé en ce que les segments d'aimant en matière magnétique dur sont en ferrite de baryum ou en terres rares.

**Claims**

1. A single-phase synchronous motor comprising a two-pole permanent-magnetically excited rotor between two electromagnetically excited stator poles, characterized in that the rotor (5, 205, 305, 405, 505) comprises a soft-magnetic block-shaped central part (19, 219, 319, 419, 519) which is diametrally symmetrical relative to the rotor axis and which has a longer dimension and a shorter dimension transverse to the rotor axis, permanent magnets (23, 233, 323, 423, 523, 523a—k) having magnet poles being arranged at opposite sides of the longer lateral surfaces (22) thus formed, which permanent magnets have directions of magnetization (35) perpendicular to the longer lateral surfaces (22) and a lower magnetic permeability than the central part (19).

2. A single-phase synchronous motor as claimed in Claim 1, characterized in that the air gaps between the permanent magnets (23) and the stator (3) are larger than the air gaps between the soft-magnetic central part (19) and the stator (3).

3. A single-phase synchronous motor as claimed in Claim 1 or 2, characterized in that the soft-magnetic central part (19) has a cuboid shape.

4. A single-phase synchronous motor as claimed in Claim 1, characterized in that the peripheral surface of the rotor is flattened parallel to the direction (35) of magnetization of the permanent magnets (23).

5. A single-phase synchronous motor as claimed in Claims 1, 2 and 3, characterized in that the permanent magnets (23) are flattened parallel to their direction (35) of magnetization.

6. A single-phase synchronous motor as claimed in Claims 1 to 5, characterized in that the peripheral surface of the rotor is roof-shaped at the location of the permanent-magnet poles (23).

7. A single-phase synchronous motor as claimed in Claims 1 to 6, characterized in that the natural frequency

$$\omega_o = \sqrt{\frac{2\hat{M}_{KL}}{J}}$$

of the system which comprises the rotor and the load and which oscillates freely with a low amplitude is unequal to the angular mains frequency $\omega_e$ and the variation of the permeance during rotation of the rotor is maximal owing to a minimal air gap between the soft-magnetic central part and the stator poles, $\hat{M}_{KL}$ being the amplitude of the magnetic detent torque and J being the mass moment if inertia of the oscillating system.

8. A single-phase synchronous motor as claimed in Claim 7, characterized in that the natural frequency $\omega_o$ is smaller than 0.9 to 0.8 $\omega_o$ and the variation of the permeance is maximal owing to a minimal air gap between the soft-magnetic central part of the stator poles.

9. A single-phase synchronous motor as claimed in Claim 1 to 8, characterized in that the inductance minimum is shifted relative to the magnetic-flux maximum through an angle < 90° (operating condition).

10. A single-phase synchronous motor as claimed in Claims 1 to 9, characterized in that the permanent magnets are made of barium-ferrite or a rare-earth material.

FIG.1

FIG.2

FIG.3

FIG.4

FIG.5

FIG.6

FIG.7

FIG.8

FIG.9

FIG.10

FIG.11

FIG.12

FIG. 13

FIG.14